# EUROPEAN PATENT APPLICATION

(11) **EP 4 550 251 A1**
(43) Date of publication of application: **07.05.2025**
(21) Application number: 24207191.8
(22) Date of filing: 17.10.2024
(51) Int. Cl.: G06T 3/4007

(54) **IMAGE PROCESSING METHOD AND SYSTEM**

(30) Priority: 03.11.2023 GB 202316918
(71) Applicant: Sony Interactive Entertainment Inc., Tokyo 108-0075 (JP)
(72) Inventor: LEONARDI, Rosario, London, W1F 7LP (GB); CONNOR, Patrick John, London, W1F 7LP (GB)
(74) Representative: D Young & Co LLP

(57) **Abstract**

There is provided an image processing method. The method comprises receiving an image, receiving gaze data indicative of a gaze location of a user for the image, performing an upscaling process on at least part of the received image to increase quality of the at least part of the received image, and outputting the upscaled image to a display device. Performing the upscaling process comprises upscaling a first region of the received image corresponding to the gaze location of the user for the image using a first kernel size and upscaling a second region of the received image using a second kernel size, where the first kernel size is larger than the second kernel size.

## Description

### BACKGROUND OF THE INVENTION

### Field of the invention

The present invention relates to a method and a system for image processing.

### Description of the Prior Art

The provision of high-quality image content has been a long-standing problem in content display contexts, with improvements being made constantly. Some of these improvements are realised with improved display devices - such as televisions with increased resolution enabling the display of more detailed imagery, and HDR (high dynamic range) capabilities enabling the display of a greater range of luminances. Other improvements have come with the increasing processing capabilities that are available to a content provider - for instance, increased processing power of games consoles has enabled the generation of more detailed virtual environments.

Increases to image quality may be considered particularly important in some arrangements, such as HMD (head-mountable display) arrangements in which users are intended to be provided with high-quality imagery so as to increase the immersiveness of a virtual or augmented reality experience.

However, with increases in image quality there is generally a corresponding increase in the amount of data required to represent that image. This can lead to significantly increased bandwidth requirements for transmitting such content, for instance, which can lead to implementation issues. Similarly, there can be an increasing in the processing required to generate such content which can lead to an increase in the latency between generating and displaying an image.

Foveated rendering is an example of a technique that has been proposed to address such issues. Foveal rendering techniques use information about the gaze direction of a user to determine which portions of an image should be rendered with a high image quality, with areas not being focused upon by a user being able to be rendered at a lower image quality. This enables the overall data size of an image to be reduced, without a significant impact on the subjective image quality experienced by a user.

In a similar vein, other techniques have been proposed which enable images to be generated with varying resolutions in different areas of an image. In some cases, these techniques can be used to provide a smooth resolution gradient throughout an image. Some of these techniques can offer a hardware-based implementation of variable quality for an image, and can be used in conjunction with other techniques such as foveated rendering.

It is in the context of the above discussion that the present disclosure arises.

### SUMMARY OF THE INVENTION

Various aspects and features of the present invention are defined in the appended claims and within the text of the accompanying description and include at least:
- In a first aspect, an image processing method is provided in accordance with claim 1.
- In another aspect, an image processing system is provided in accordance with claim 15.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 schematically illustrates an HMD worn by a user;
- Figure 2 is a schematic plan view of an HMD;
- Figure 3 schematically illustrates the formation of a virtual image by an HMD;
- Figure 4 schematically illustrates another type of display for use in an HMD;
- Figure 5 schematically illustrates a pair of stereoscopic images;
- Figure 6a schematically illustrates a plan view of an HMD;
- Figure 6b schematically illustrates a near-eye tracking arrangement;
- Figure 7 schematically illustrates a remote tracking arrangement;
- Figure 8 schematically illustrates a gaze tracking environment;
- Figure 9 schematically illustrates a gaze tracking system;
- Figure 10 schematically illustrates a human eye;
- Figure 11 schematically illustrates a graph of human visual acuity;
- Figure 12 schematically illustrates an image processing system;
- Figure 13a schematically illustrates an example of an upscaled image;
- Figure 13b schematically illustrates another example of an upscaled image;
- Figure 14 schematically illustrates a graph of kernel size for upscaling versus distance from a gaze location;
- Figure 15 schematically illustrates different kernel sizes for upscaling of an image; and
- Figure 16 is a schematic flowchart illustrating an image processing method.

### DESCRIPTION OF THE EMBODIMENTS

A method and a system for image processing are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

Firstly, discussion of a system in which gaze tracking is used to determine a user's point of focus on an HMD is described - this is an example of a system which may utilise embodiments of the present disclosure, but embodiments need not be limited to an HMD and may be used in any other foveated rendering implementations.

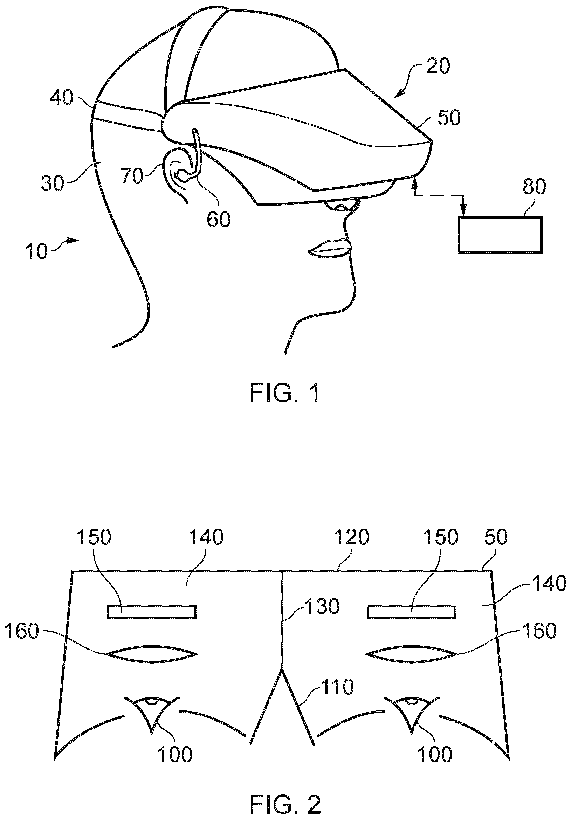

Referring to Figure 1, a user 10 is wearing an HMD 20 (as an example of a generic head-mountable apparatus - other examples including audio headphones or a head-mountable light source) on the user's head 30. The HMD comprises a frame 40, in this example formed of a rear strap and a top strap, and a display portion 50. As noted above, many gaze tracking arrangements may be considered particularly suitable for use in HMD systems; however, use with such an HMD system should not be considered essential.

Note that the HMD of Figure 1 may comprise further features, to be described below in connection with other drawings, but which are not shown in Figure 1 for clarity of this initial explanation.

The HMD of Figure 1 completely (or at least substantially completely) obscures the user's view of the surrounding environment. All that the user can see is the pair of images displayed within the HMD, as supplied by an external processing device such as a games console in many embodiments. Of course, in some embodiments images may instead (or additionally) be generated by a processor or obtained from memory located at the HMD itself.

The HMD has associated headphone audio transducers or earpieces 60 which fit into the user's left and right ears 70. The earpieces 60 replay an audio signal provided from an external source, which may be the same as the video signal source which provides the video signal for display to the user's eyes.

The combination of the fact that the user can see only what is displayed by the HMD and, subject to the limitations of the noise blocking or active cancellation properties of the earpieces and associated electronics, can hear only what is provided via the earpieces, mean that this HMD may be considered as a so-called "full immersion" HMD. Note however that in some embodiments the HMD is not a full immersion HMD, and may provide at least some facility for the user to see and/or hear the user's surroundings. This could be by providing some degree of transparency or partial transparency in the display arrangements, and/or by projecting a view of the outside (captured using a camera, for example a camera mounted on the HMD) via the HMD's displays, and/or by allowing the transmission of ambient sound past the earpieces and/or by providing a microphone to generate an input sound signal (for transmission to the earpieces) dependent upon the ambient sound.

A front-facing camera 122 may capture images to the front of the HMD, in use. Such images may be used for head tracking purposes, in some embodiments, while it may also be suitable for capturing images for an augmented reality (AR) style experience. A Bluetooth" antenna 124 may provide communication facilities or may simply be arranged as a directional antenna to allow a detection of the direction of a nearby Bluetooth transmitter.

In operation, a video signal is provided for display by the HMD. This could be provided by an external video signal source 80 such as a video games machine or data processing apparatus (such as a personal computer), in which case the signals could be transmitted to the HMD by a wired or a wireless connection. Examples of suitable wireless connections include Bluetooth^{®} connections. Audio signals for the earpieces 60 can be carried by the same connection. Similarly, any control signals passed from the HMD to the video (audio) signal source may be carried by the same connection. Furthermore, a power supply (including one or more batteries and/or being connectable to a mains power outlet) may be linked by a cable to the HMD. Note that the power supply and the video signal source 80 may be separate units or may be embodied as the same physical unit. There may be separate cables for power and video (and indeed for audio) signal supply, or these may be combined for carriage on a single cable (for example, using separate conductors, as in a USB cable, or in a similar way to a "power over Ethernet" arrangement in which data is carried as a balanced signal and power as direct current, over the same collection of physical wires). The video and/or audio signal may be carried by, for example, an optical fibre cable. In other embodiments, at least part of the functionality associated with generating image and/or audio signals for presentation to the user may be carried out by circuitry and/or processing forming part of the HMD itself. A power supply may be provided as part of the HMD itself.

Some embodiments of the invention are applicable to an HMD having at least one electrical and/or optical cable linking the HMD to another device, such as a power supply and/or a video (and/or audio) signal source. So, embodiments of the invention can include, for example:
(a) an HMD having its own power supply (as part of the HMD arrangement) but a cabled connection to a video and/or audio signal source;
(b) an HMD having a cabled connection to a power supply and to a video and/or audio signal source, embodied as a single physical cable or more than one physical cable;
(c) an HMD having its own video and/or audio signal source (as part of the HMD arrangement) and a cabled connection to a power supply; or
(d) an HMD having a wireless connection to a video and/or audio signal source and a cabled connection to a power supply.

If one or more cables are used, the physical position at which the cable enters or joins the HMD is not particularly important from a technical point of view. Aesthetically, and to avoid the cable(s) brushing the user's face in operation, it would normally be the case that the cable(s) would enter or join the HMD at the side or back of the HMD (relative to the orientation of the user's head when worn in normal operation). Accordingly, the position of the cables relative to the HMD in Figure 1 should be treated merely as a schematic representation.

Accordingly, the arrangement of Figure 1 provides an example of a head-mountable display system comprising a frame to be mounted onto an observer's head, the frame defining one or two eye display positions which, in use, are positioned in front of a respective eye of the observer and a display element mounted with respect to each of the eye display positions, the display element providing a virtual image of a video display of a video signal from a video signal source to that eye of the observer.

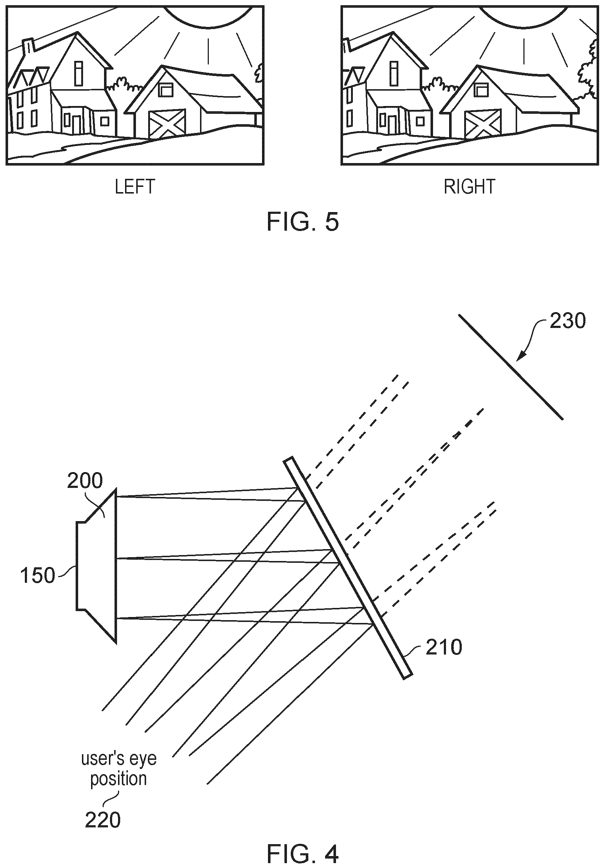

Figure 1 shows just one example of an HMD. Other formats are possible: for example an HMD could use a frame more similar to that associated with conventional eyeglasses, namely a substantially horizontal leg extending back from the display portion to the top rear of the user's ear, possibly curling down behind the ear. In other (not full immersion) examples, the user's view of the external environment may not in fact be entirely obscured; the displayed images could be arranged so as to be superposed (from the user's point of view) over the external environment. An example of such an arrangement will be described below with reference to Figure 4.

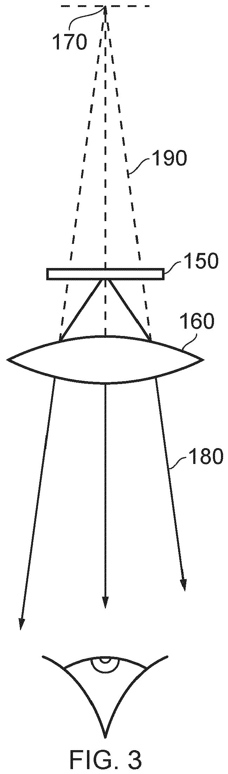

In the example of Figure 1, a separate respective display is provided for each of the user's eyes. A schematic plan view of how this is achieved is provided as Figure 2, which illustrates the positions 100 of the user's eyes and the relative position 110 of the user's nose. The display portion 50, in schematic form, comprises an exterior shield 120 to mask ambient light from the user's eyes and an internal shield 130 which prevents one eye from seeing the display intended for the other eye. The combination of the user's face, the exterior shield 120 and the interior shield 130 form two compartments 140, one for each eye. In each of the compartments there is provided a display element 150 and one or more optical elements 160. The way in which the display element and the optical element(s) cooperate to provide a display to the user will be described with reference to Figure 3.

Referring to Figure 3, the display element 150 generates a displayed image which is (in this example) refracted by the optical elements 160 (shown schematically as a convex lens but which could include compound lenses or other elements) so as to generate a virtual image 170 which appears to the user to be larger than and significantly further away than the real image generated by the display element 150. As an example, the virtual image may have an apparent image size (image diagonal) of more than 1 m and may be disposed at a distance of more than 1 m from the user's eye (or from the frame of the HMD). In general terms, depending on the purpose of the HMD, it is desirable to have the virtual image disposed a significant distance from the user. For example, if the HMD is for viewing movies or the like, it is desirable that the user's eyes are relaxed during such viewing, which requires a distance (to the virtual image) of at least several metres. In Figure 3, solid lines (such as the line 180) are used to denote real optical rays, whereas broken lines (such as the line 190) are used to denote virtual rays.

An alternative arrangement is shown in Figure 4. This arrangement may be used where it is desired that the user's view of the external environment is not entirely obscured. However, it is also applicable to HMDs in which the user's external view is wholly obscured. In the arrangement of Figure 4, the display element 150 and optical elements 200 cooperate to provide an image which is projected onto a mirror 210, which deflects the image towards the user's eye position 220. The user perceives a virtual image to be located at a position 230 which is in front of the user and at a suitable distance from the user.

In the case of an HMD in which the user's view of the external surroundings is entirely obscured, the mirror 210 can be a substantially 100% reflective mirror. The arrangement of Figure 4 then has the advantage that the display element and optical elements can be located closer to the centre of gravity of the user's head and to the side of the user's eyes, which can produce a less bulky HMD for the user to wear. Alternatively, if the HMD is designed not to completely obscure the user's view of the external environment, the mirror 210 can be made partially reflective so that the user sees the external environment, through the mirror 210, with the virtual image superposed over the real external environment.

In the case where separate respective displays are provided for each of the user's eyes, it is possible to display stereoscopic images. An example of a pair of stereoscopic images for display to the left and right eyes is shown in Figure 5. The images exhibit a lateral displacement relative to one another, with the displacement of image features depending upon the (real or simulated) lateral separation of the cameras by which the images were captured, the angular convergence of the cameras and the (real or simulated) distance of each image feature from the camera position.

Note that the lateral displacements in Figure 5 could in fact be the other way round, which is to say that the left eye image as drawn could in fact be the right eye image, and the right eye image as drawn could in fact be the left eye image. This is because some stereoscopic displays tend to shift objects to the right in the right eye image and to the left in the left eye image, so as to simulate the idea that the user is looking through a stereoscopic window onto the scene beyond. However, some HMDs use the arrangement shown in Figure 5 because this gives the impression to the user that the user is viewing the scene through a pair of binoculars. The choice between these two arrangements is at the discretion of the system designer.

In some situations, an HMD may be used simply to view movies and the like. In this case, there is no change required to the apparent viewpoint of the displayed images as the user turns the user's head, for example from side to side. In other uses, however, such as those associated with virtual reality (VR) or augmented reality (AR) systems, the user's viewpoint needs to track movements with respect to a real or virtual space in which the user is located.

As mentioned above, in some uses of the HMD, such as those associated with virtual reality (VR) or augmented reality (AR) systems, the user's viewpoint needs to track movements with respect to a real or virtual space in which the user is located.

This tracking is carried out by detecting motion of the HMD and varying the apparent viewpoint of the displayed images so that the apparent viewpoint tracks the motion. The detection may be performed using any suitable arrangement (or a combination of such arrangements). Examples include the use of hardware motion detectors (such as accelerometers or gyroscopes), external cameras operable to image the HMD, and outwards-facing cameras mounted onto the HMD.

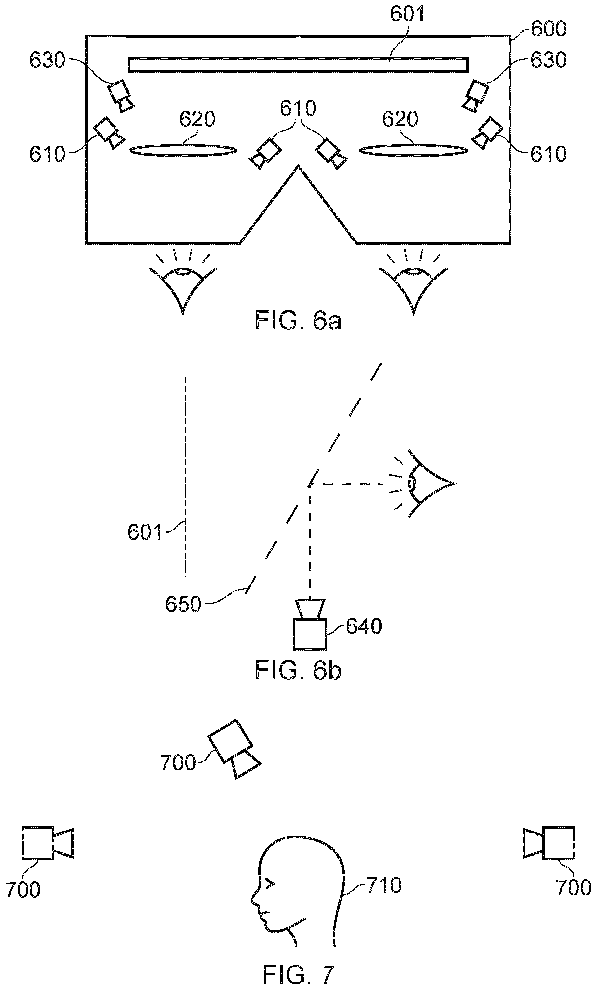

Turning to gaze tracking in such an arrangement, Figure 6 schematically illustrates two possible arrangements for performing eye tracking on an HMD. The cameras provided within such arrangements may be selected freely so as to be able to perform an effective eye-tracking method. In some existing arrangements, visible light cameras are used to capture images of a user's eyes. Alternatively, infra-red (IR) cameras are used so as to reduce interference either in the captured signals or with the user's vision should a corresponding light source be provided, or to improve performance in low-light conditions.

Figure 6a shows an example of a gaze tracking arrangement in which the cameras are arranged within an HMD so as to capture images of the user's eyes from a short distance. This may be referred to as near-eye tracking, or head-mounted tracking.

In this example, an HMD 600 (with a display element 601) is provided with cameras 610 that are each arranged so as to directly capture one or more images of a respective one of the user's eyes using an optical path that does not include the lens 620. This may be advantageous in that distortion in the captured image due to the optical effect of the lens is able to be avoided. Four cameras 610 are shown here as examples of possible positions that eye-tracking cameras may provided, although it should be considered that any number of cameras may be provided in any suitable location so as to be able to image the corresponding eye effectively. For example, only one camera may be provided per eye or more than two cameras may be provided for each eye.

However it is considered that in a number of embodiments it is advantageous that the cameras are instead arranged so as to include the lens 620 in the optical path used to capture images of the eye. Examples of such positions are shown by the cameras 630. While this may result in processing being required to enable suitably accurate tracking to be performed, due to the deformation in the captured image due to the lens, this may be performed relatively simply due to the fixed relative positions of the corresponding cameras and lenses. An advantage of including the lens within the optical path may be that of simplifying the physical constraints upon the design of an HMD, for example.

Figure 6b shows an example of a gaze tracking arrangement in which the cameras are instead arranged so as to indirectly capture images of the user's eyes. Such an arrangement may be particularly suited to use with IR or otherwise non-visible light sources, as will be apparent from the below description.

Figure 6b includes a mirror 650 arranged between a display 601 and the viewer's eye (of course, this can be extended to or duplicated at the user's other eye as appropriate). For the sake of clarity, any additional optics (such as lenses) are omitted in this Figure - it should be appreciated that they may be present at any suitable position within the depicted arrangement. The mirror 650 in such an arrangement is selected so as to be partially transmissive; that is, the mirror 650 should be selected so as to enable the camera 640 to obtain an image of the user's eye while the user views the display 601. One method of achieving this is to provide a mirror 650 that is reflective to IR wavelengths but transmissive to visible light - this enables IR light used for tracking to be reflected from the user's eye towards the camera 640 while the light emitted by the display 601 passes through the mirror uninterrupted.

Such an arrangement may be advantageous in that the cameras may be more easily arranged out of view of the user, for instance. Further to this, improvements to the accuracy of the eye tracking may be obtained due to the fact that the camera captures images from a position that is effectively (due to the reflection) along the axis between the user's eye and the display.

Of course, eye-tracking arrangements need not be implemented in a head-mounted or otherwise near-eye fashion as has been described above. For example, Figure 7 schematically illustrates a system in which a camera is arranged to capture images of the user from a distance; this distance may vary during tracking, and may take any value in dependence upon the parameters of the tracking system. For example, this distance may be thirty centimetres, a metre, five metres, ten metres, or indeed any value so long as the tracking is not performed using an arrangement that is affixed to the user's head.

In Figure 7, an array of cameras 700 is provided that together provide multiple views of the user 710. These cameras are configured to capture information identifying at least the direction in which a user's 710 eyes are focused, using any suitable method. For example, IR cameras may be utilised to identify reflections from the user's 710 eyes. An array of cameras 700 may be provided so as to provide multiple views of the user's 710 eyes at any given time, or may be provided so as to simply ensure that at any given time at least one camera 700 is able to view the user's 710 eyes. It is apparent that in some use cases it may not be necessary to provide such a high level of coverage and instead only one or two cameras 700 may be used to cover a smaller range of possible viewing directions of the user 710.

Of course, the technical difficulties associated with such a long-distance tracking method may be increased; higher resolution cameras may be required, as may stronger light sources for generating IR light, and further information (such as head orientation of the user) may need to be input to determine a focus of the user's gaze. The specifics of the arrangement may be determined in dependence upon a required level of robustness, accuracy, size, and/or cost, for example, or any other design consideration.

Despite technical challenges including those discussed above, such tracking methods may be considered beneficial in that they allow a greater range of interactions for a user - rather than being limited to HMD viewing, gaze tracking may be performed for a viewer of a television, for instance.

Rather than varying only in the location in which cameras are provided, eye-tracking arrangements may also differ in where the processing of the captured image data to determine tracking data is performed.

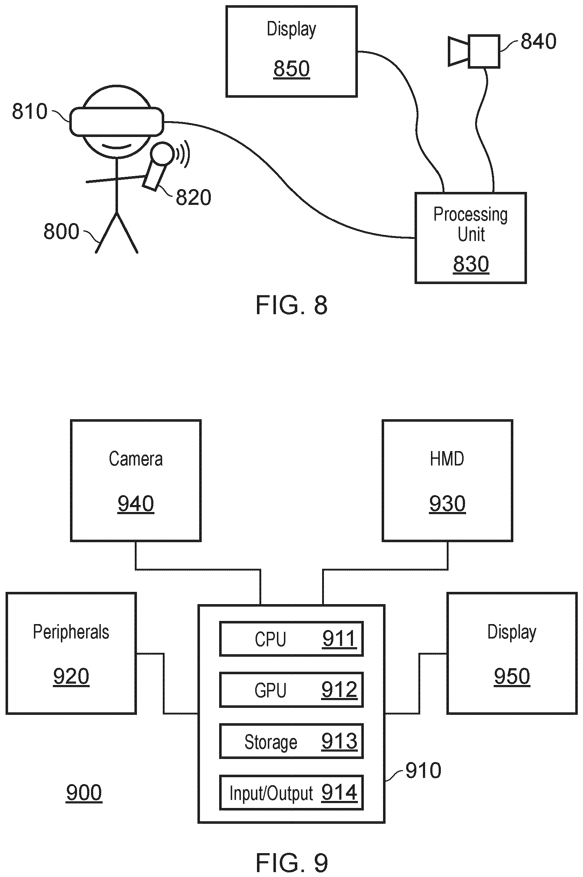

Figure 8 schematically illustrates an environment in which an eye-tracking process may be performed. In this example, the user 800 is using an HMD 810 that is associated with the processing unit 830, such as a games console, with the peripheral 820 allowing a user 800 to input commands to control the processing. The HMD 810 may perform eye tracking in line with an arrangement exemplified by Figure 6a or 6b, for example - that is, the HMD 810 may comprise one or more cameras operable to capture images of either or both of the user's 800 eyes. The processing unit 830 may be operable to generate content for display at the HMD 810; although some (or all) of the content generation may be performed by processing units within the HMD 810.

The arrangement in Figure 8 also comprises a camera 840, located outside of the HMD 810, and a display 850. In some cases, the camera 840 may be used for performing tracking of the user 800 while using the HMD 810, for example to identify body motion or a head orientation. The camera 840 and display 850 may be provided as well as or instead of the HMD 810; for example these may be used to capture images of a second user and to display images to that user while the first user 800 uses the HMD 810, or the first user 800 may be tracked and view content with these elements instead of the HMD 810. That is to say, the display 850 may be operable to display generated content provided by the processing unit 830 and the camera 840 may be operable to capture images of one or more users' eyes to enable eye-tracking to be performed.

While the connections shown in Figure 8 are shown by lines, this should of course not be taken to mean that the connections should be wired; any suitable connection method, including wireless connections such as wireless networks or Bluetooth^{®}, may be considered suitable. Similarly, while a dedicated processing unit 830 is shown in Figure 8 it is also considered that the processing may in some embodiments be performed in a distributed manner - such as using a combination of two or more of the HMD 810, one or more processing units, remote servers (cloud processing), or games consoles.

The processing required to generate tracking information from captured images of the user's 800 eye or eyes may be performed locally by the HMD 810, or the captured images or results of one or more detections may be transmitted to an external device (such as a the processing unit 830) for processing. In the former case, the HMD 810 may output the results of the processing to an external device for use in an image generation process if such processing is not performed exclusively at the HMD 810. In embodiments in which the HMD 810 is not present, captured images from the camera 840 are output to the processing unit 830 for processing.

Figure 9 schematically illustrates a system for performing one or more eye tracking processes, for example in an embodiment such as that discussed above with reference to Figure 8. The system 900 comprises a processing device 910, one or more peripherals 920, an HMD 930, a camera 940, and a display 950. Of course, not all elements need be present within the system 900 in a number of embodiments - for instance, if the HMD 930 is present then it is considered that the camera 940 may be omitted as it is unlikely to be able to capture images of the user's eyes.

As shown in Figure 9, the processing device 910 may comprise one or more of a central processing unit (CPU) 911, a graphics processing unit (GPU) 912, storage (such as a hard drive, or any other suitable data storage medium) 913, and an input/output 914. These units may be provided in the form of a personal computer, a games console, or any other suitable processing device.

For example, the CPU 911 may be configured to generate tracking data from one or more input images of the user's eyes from one or more cameras, or from data that is indicative of a user's eye direction. This may be data that is obtained from processing images of the user's eye at a remote device, for example. Of course, should the tracking data be generated elsewhere then such processing would not be necessary at the processing device 910.

The GPU 912 may be configured to generate content for display to the user on which the eye tracking is being performed. In some embodiments, the content itself may be modified in dependence upon the tracking data that is obtained - an example of this is the generation of content in accordance with a foveal rendering technique. Of course, such content generation processes may be performed elsewhere - for example, an HMD 930 may have an on-board GPU that is operable to generate content in dependence upon the eye tracking data.

The storage 913 may be provided so as to store any suitable information. Examples of such information include program data, content generation data, and eye tracking model data. In some cases, such information may be stored remotely such as on a server, and as such a local storage 913 may not be required - the discussion of the storage 913 should therefore be considered to refer to local (and in some cases removable storage media) or remote storage.

The input/output 914 may be configured to perform any suitable communication as appropriate for the processing device 910. Examples of such communication include the transmission of content to the HMD 930 and/or display 950, the reception of eye-tracking data and/or images from the HMD 930 and/or the camera 940, and communication with one or more remote servers (for example, via the internet).

As discussed above, the peripherals 920 may be provided to allow a user to provide inputs to the processing device 910 in order to control processing or otherwise interact with generated content. This may be in the form of button presses or the like, or alternatively via tracked motion to enable gestures to be used as inputs.

The HMD 930 may comprise a number of sub-elements, which have been omitted from Figure 9 for the sake of clarity. Of course, the HMD 930 should comprise a display unit operable to display images to a user. In addition to this, the HMD 930 may comprise any number of suitable cameras for eye tracking (as discussed above), in addition to one or more processing units that are operable to generate content for display and/or generate eye tracking data from the captured images.

The camera 940 and display 950 may be configured in accordance with the discussion of the corresponding elements above with respect to Figure 8.

Turning to the image capture process upon which the eye tracking is based, examples of different cameras are discussed. The first of these is a standard camera, which captures a sequence of images of the eye that may be processed to determine tracking information. The second is that of an event camera, which instead generates outputs in accordance with observed changes in brightness.

It is more common to use standard cameras in such tracking arrangements, given that they are widely available and often relatively cheap to produce. 'Standard cameras' here refer to cameras which capture images of the environment at predetermined intervals which can be combined to generate video content. For example, a typical camera of this type may capture thirty images (frames) each second, and these images may be output to a processing unit for feature detection or the like to be performed so as to enable tracking of the eye.

Such a camera comprises a light-sensitive array that is operable to record light information during an exposure time, with the exposure time being controlled by a shutter speed (the speed of which dictates the frequency of image capture). The shutter may be configured as a rolling shutter (line-by-line reading of the captured information) or a global shutter (reading the captured information of the whole frame simultaneously), for example.

However, in some arrangements it may be considered advantageous to instead use an event camera, which may also be referred to as a dynamic vision sensor. Such cameras do not require a shutter as described above, and instead each element of the light-sensitive array (often referred to as a pixel) is configured to output a signal at any time a threshold brightness change is observed. This means that images are not output in the traditional sense - however an image reconstruction algorithm may be applied that is able to generate an image from the signals output by an event camera.

While there is an increased computational complexity for generating an image from such data, the output of the event camera can be used for tracking without any image generation. One example of how this is performed is that of using an IR-sensitive event camera; when imaged using IR light, the pupil of the human eye displays a much higher level of brightness than the surrounding features. By selecting an appropriate threshold brightness, the motion of the pupil would be expected to trigger events (and corresponding outputs) at the sensor.

Independent of the type of camera that is selected, in many cases it may be advantageous to provide illumination to the eye in order to obtain a suitable image. One example of this is the provision of an IR light source that is configured to emit light in the direction of one or both of the user's eyes; an IR camera may then be provided that is able to detect reflections from the user's eye in order to generate an image. IR light may be preferable as it is invisible to the human eye, and as such does not interfere with normal viewing of content by the user, but it is not considered to be essential. In some cases, the illumination may be provided by a light source that is affixed to the imaging device, while in other embodiments it may instead be that the light source is arranged away from the imaging device.

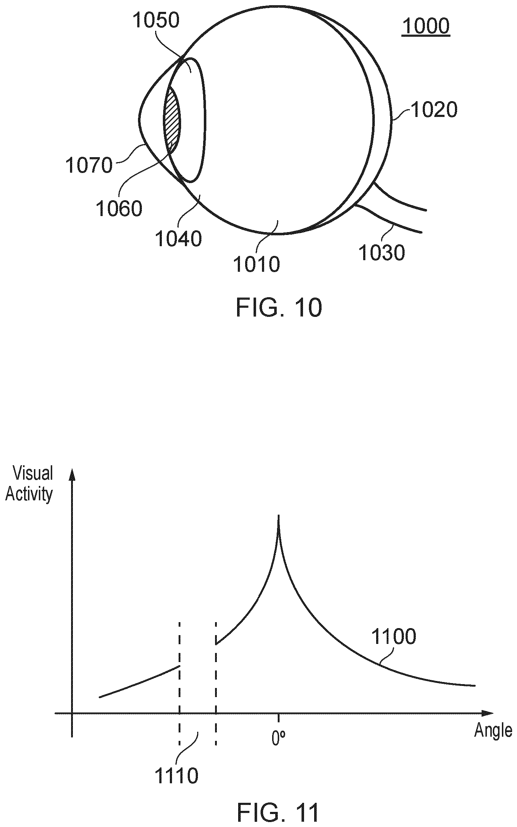

As suggested in the discussion above, the human eye does not have a uniform structure; that is, the eye is not a perfect sphere, and different parts of the eye have different characteristics (such as varying reflectance or colour). Figure 10 shows a simplified side view of the structure of a typical eye 1000; this Figure has omitted features such as the muscles which control eye motion for the sake of clarity.

The eye 1000 is formed of a near-spherical structure filled with an aqueous solution 1010, with a retina 1020 formed on the rear surface of the eye 1000. The optic nerve 1030 is connected at the rear of the eye 1000. Images are formed on the retina 1020 by light entering the eye 1000, and corresponding signals carrying visual information are transmitted from the retina 1020 to the brain via the optic nerve 1030.

Turning to the front surface of the eye 1000, the sclera 1040 (commonly referred to as the white of the eye) surrounds the iris 1050. The iris 1050 controls the size of the pupil 1060, which is an aperture through which light enters the eye 1000. The iris 1050 and pupil 1060 are covered by the cornea 1070, which is a transparent layer which can refract light entering the eye 1000. The eye 1000 also comprises a lens (not shown) that is present behind the iris 1050 that may be controlled to adjust the focus of the light entering the eye 1000.

The structure of the eye is such that there is an area of high visual acuity (the fovea), with a sharp drop off either side of this. This is illustrated by the curve 1100 of Figure 11, with the peak in the centre representing the foveal region. The area 1110 is the 'blind spot'; this is an area in which the eye has no visual acuity as it corresponds to the area where the optic nerve meets the retina. The periphery (that is, the viewing angles furthest from the fovea) is not particularly sensitive colour or detail, and instead is used to detect motion.

Foveal rendering is a rendering technique that takes advantage of the relatively small size (around 2.5 degrees) of the fovea and the sharp fall-off in acuity outside of that.

The eye undergoes a large amount of motion during viewing, and this motion may be categorised into one of a number of categories.

Saccades, and on a smaller scale micro-saccades, are identified as fast motions in which the eyes rapidly move between different points of focus (often in a jerky fashion). This may be considered as ballistic motion, in that once the movement has been initiated it cannot be altered. Saccades are often not conscious eye motions, and instead are performed reflexively to survey an environment. Saccades may last up to two hundred milliseconds, depending on the distance rotated by the eye, but may be as short as twenty milliseconds. The speed of a saccade is also dependent upon the total rotation angle; typical speeds may be between two hundred and five hundred degrees per second.

'Smooth pursuit' refers to a slower movement type than a saccade. Smooth pursuit is generally associated with a conscious tracking of a point of focus by a viewer, and is performed so as to maintain the position of a target within (or at least substantially within) the foveal region of the viewer's vision. This enables a high-quality view of a target of interest to be maintained in spite of motion. If the target moves too fast, then smooth pursuit may instead require a number of saccades in order to keep up; this is because smooth pursuit has a lower maximum speed, in the region of thirty degrees per second.

The vestibular-ocular reflex is a further example of eye motion. The vestibular-ocular reflex is the motion of the eyes that counteracts head motion; that is, the motion of the eyes relative to the head that enables a person to remain focused on a particular point despite moving their head.

Another type of motion is that of the vergence accommodation reflex. This is the motion that causes the eyes to rotate to converge at a point, and the corresponding adjustment of the lens within the eye to cause that point to come into focus.

Further eye motions that may be observed as a part of a gaze tracking process are those of blinks or winks, in which the eyelid covers the eyes of the user. Such motions may be reflexive or intentional, and can often interfere with eye tracking as they will obscure vision of the eye, and the eye is often not stationary during such a motion.

Movements of the eye are performed by a user wearing an HMD whilst viewing images displayed by the HMD to enable detailed visual analysis of a portion of an image displayed by the HMD. In particular, the eye can be rotated to reposition the fovea and the pupil to enable detailed visual analysis for the portion of the image for which light is incident upon the fovea. Similarly, movements of the eye are also performed by a user not wearing an HMD whilst viewing images displayed by a display unit, such as the display unit 850 or 950 described previously with reference to Figures 8 and 9.

As has been discussed above, foveal rendering is a rendering technique that takes advantage of the relatively small size (around 2.5 degrees) of the fovea and the sharp fall-off in acuity outside of that. In other words, such techniques make use of the fact that a user sees only a small portion of an image in high quality, with a sharp drop off of image quality perception outside of that, to render only a portion of an image at a highest level of quality.

Conventional techniques for foveated rendering typically require multiple render passes to allow an image frame to be rendered multiple times at different image resolutions so that the resulting renders are then composited together to achieve regions of different image resolution in an image frame. The use of multiple render passes requires significant processing overhead and undesirable image artefacts can arise at the boundaries between the regions. Alternatively, in some cases hardware can be used that allows rendering at different resolutions in different parts of an image frame without needing additional render passes. Such hardware-accelerated implementations may therefore be better in terms of performance, but this comes with limitations as to the smoothness of the transition between the regions of different image resolution within the image frame. In some implementations, only a limited number of regions can be used and a noticeably sharp drop in image resolution is observed between the regions.

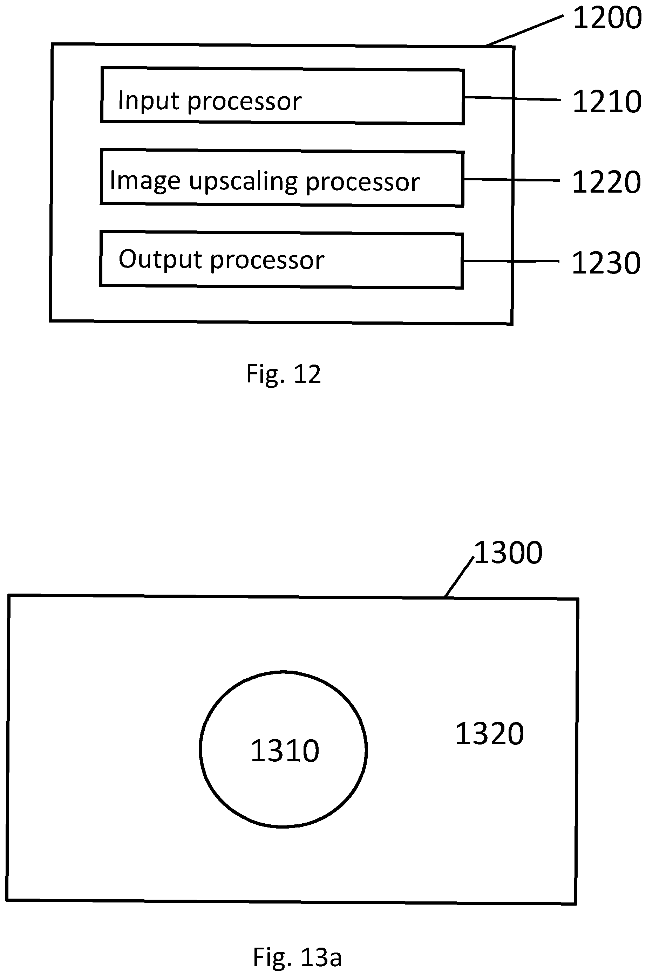

Turning now to Figure 12, embodiments of the present description relate to an image processing system 1200 that implements a form of foveated rendering by performing a post-processing upscaling process on an image where a first region of the image corresponding to a gaze location of a user for the image is upscaled using a first, larger, kernel size, and a second region of the image (e.g. the remainder of the image, or a part of the image further away from the gaze location) is upscaled using a second, smaller, kernel size. This allows improving efficiency as it allows rendering the image natively at a lower resolution, and so reduced computational cost, and then selectively upscaling regions of the image to upscale (e.g. increase the resolution of) parts of the image that the user is gazing at. Upscaling provides a computationally efficient technique for improving the quality of the image, and allows reducing the latency for outputting the images (which may be natively rendered at lower resolution), which in turn can e.g. allow increasing the frame rate for output content. This approach can provide improved efficiency (and/or increased frame rate) as compared to multiple render passes and does not require dedicated hardware while, as discussed below, making the use of foveated rendering less noticeable to the user.

By using different kernel sizes for upscaling different regions of the image, the present approach allows improving the balance between image quality and computational cost as a larger kernel (which requires more computation) is used for the first, foveal region to improve the quality of that region, while still upscaling a second, further region (in some implementations, the rest) of the image using a smaller kernel (and so at reduced computational cost). Thus, both the first and second regions can be natively rendered at lower resolution and efficiently upscaled.

The present approach also improves the resilience of the foveated rendering process to inaccuracies in the gaze location data (e.g. due to sudden gaze movements) as upscaling the second region improves the perceived quality of the image beyond just the first, foveal, region, while doing so using a larger kernel size and so at reduced computational cost.

The present approach is particularly applicable to virtual reality applications. Virtual reality can present a particular challenge due to constant viewpoint changes (as the viewpoint is based upon head motion), and the use of foveated rendering to distort the displayed images. This can result in the use of foveated rendering being noticeable to the user and reducing the user's immersiveness in the content. As discussed herein, the present approach allows addressing these challenges by taking advantage of the foveal effect while reducing the noticeability of doing this to the user.

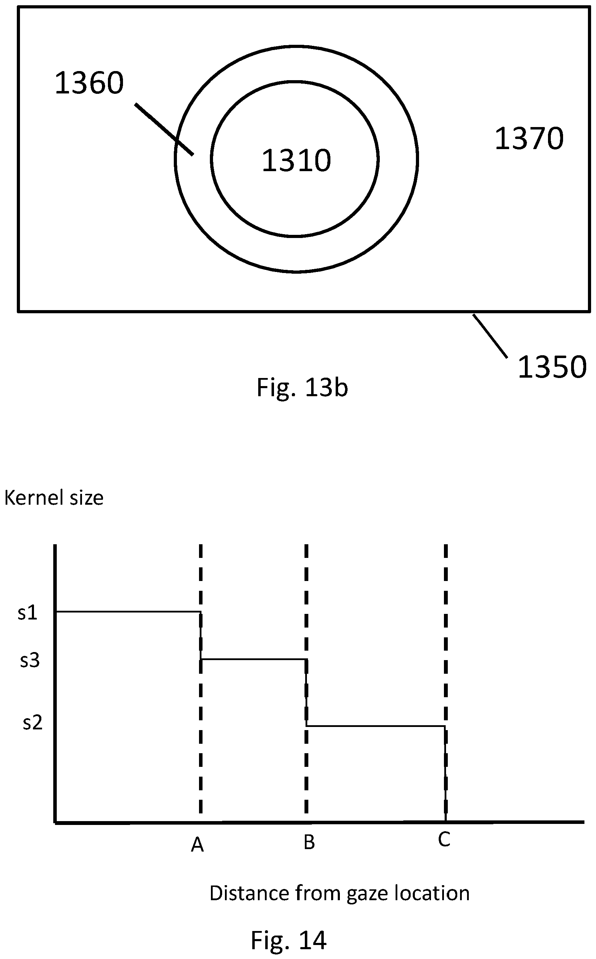

Turning now also to Figures 13a, 13b, and 14, in the present approach, a first quality of upscaling of an image 1300 may be provided in a first region 1310 corresponding to the gaze location of the user (e.g. as predicted using a machine learning model, or as detected using a detector / gaze tracking apparatus), whilst a second quality of upscaling of the image may be provided in a second region 1320 away from the user's gaze location. The first upscaling quality is higher than the second upscaling quality by virtue of using different kernel sizes, as described herein.

The transition from the first upscaling quality to second upscaling quality within the image may be instantaneous at the first region boundary, as shown in Figure 13a, or may ramp between the first and second qualities in a linear or non-linear manner over a predetermined distance from the first region, as shown in Figure 13b and Figure 14. In Figure 13b, an image 1350 comprises the first region 1310 and a second region 1370, with a third, transition region 1360 between them. The ramp in upscaling quality between the first and second regions through the transition region may be implemented by using progressively smaller kernel sizes away from the gaze location as shown in Figure 14 - by selecting appropriate kernel sizes for each region, a linear or non-linear ramp in quality between the regions may be provided. In Figure 14, the dotted lines A, B, and C represent boundaries between regions (e.g. A representing the boundary between the first region and the third region, and B representing the boundary between the third region and the second region), whilst s1, s2, and s3 are indicative of the relative kernel sizes used to upscale the first, second, and third regions.

It will be appreciated that while the quality of upscaling of the first and second regions is different by virtue of using different kernel sizes, the resolution of the upscaled image in the first and second regions may be the same. In one or more examples of the present disclosure, upscaling of the image comprises upscaling of both the first region and the second region to the same 'target' resolution (e.g. 1280x720). By using a larger kernel, the quality of the upscaling is higher in the first region (and so e.g. artefacts are less likely) than in the second region; however, in contrast to existing techniques, both regions are upscaled to the same resolution. This lack of variation in image resolution allows making the present foveated rendering approach less, and in some cases not at all, perceptible to the user, in particular in embodiments where the second regions comprises the remainder of the image except the first region and so the user is viewing an output image with a uniform resolution. This contrasts with existing foveated rendering techniques where the resolution of images typically varies across the image, making the use of foveated rendering more noticeable to the user.

Alternatively, the first and second regions may be upscaled to different resolutions, with a higher resolution for the first region and a lower resolution for the second region.

Returning back to Figure 12, this shows an example of an image processing system 1200 in accordance with one or more embodiments of the present disclosure.

The image processing system 1200 comprises an input processor 1210, an image upscaling processor 1220, and an output processor 1230. The input processor 1210 receives an image, and gaze data indicative of a gaze location of a user for the image. The image upscaling processor 1220 then performs an upscaling process on at least part of the image (e.g. to increase its resolution), using a first kernel size for a first region of the received image corresponding to the gaze location and a second kernel size for a second region of the received image, where the first kernel size is greater than the second kernel size. For example, the image upscaling processor 1220 may increase the resolution of the at least part of the image by interpolating between pixels of the image (e.g. using Lanczos resampling) using a larger kernel (i.e. based on more neighbouring pixels) for the first region than for the second region. In this way, the image is upscaled to different qualities in the first and second region, with a higher quality (e.g. lower likelihood of artefacts) provided in the first, foveal, region. Once the image is upscaled, the output processor 1230 outputs the upscaled image to a display device (e.g. the display portion 50 of the HMD 20, or a television).

The image processing system 1200 may be provided as part of a processing device, such as the processing device 910, or provided as part of an HMD 600, 810 or as part of a server. Each of the processors 1210, 1220, 1230 may, for example, comprise a GPU and/or CPU located in the processing device, HMD, or the server.

In the case where the image processing system 1200 is provided as part of the processing device 910, the input processor 1210 may receive the gaze data via a wired or wireless communication (e.g. Bluetooth^{®} communication link) from an HMD comprising a gaze detector (such as the HMD 600, 810) or from a detector (such as any one of the detectors 610, 630, 640, 700, 840, 940) and the output processor 1230 may output the upscaled image for display to the user by transmitting the upscaled image to the HMD or a display unit (such as the display unit 950) arranged with respect to the user via a wired or wireless communication. In some examples, the image processing system 1200 may be provided as part of a server, the input processor 1210 may be configured to receive the gaze data from the HMD or the detector (or a processing device, such as a personal computer or a game console associated with the HMD or the detector) via a wireless communication, and the output processor 1230 may be configured to output the upscaled image for display to the user by communicating image data corresponding to the upscaled image to the HMD or a display unit (such as the display unit 950) arranged with respect to the user.

The functionality of the various processors 1210, 1220, 1230 will now be described in further detail.

Firstly, the input processor 1210 receives an image for output to a user. The image may for example be an image frame of a videogame. In some cases, the image processing system 1200 may further comprise a rendering processor configured to render the image, and then transmit this image to the input processor 1210.

The received image may comprise a standalone image or be part of a set of images (e.g. such as an image frame of video). It will be appreciated that the present techniques may be applied to upscale each image in a set of images to provide improved quality video for output to a user. The received image may be for a videogame. However, it will be appreciated that the present techniques can be applied to any type of image.

The received image is typically of a lower quality (e.g. lower resolution such as 720×480 pixels). This allows efficiently rendering the image and reducing lag. In this way, for example a high image frame rate may be achieved.

As described herein, prior to outputting the received image, the image is upscaled to increase its quality (e.g. resolution). This allows providing an improved and more immersive visual experience for the user, at reduced computational cost as upscaling can be more efficient than natively rendering an image to a higher quality.

The input processor 1210 further receives gaze data indicative of a gaze location of a user for the image. In other words, the input processor 1210 receives data that indicates where a user of the image (i.e. the user for whom the upscaled image is output) is directing their gaze. The gaze data may be indicative of a detected gaze location of the user, and/or of a predicted gaze location of the user.

Considering detecting gaze location, the input processor 1210 may receive gaze data indicative of a current gaze location of a user for the image as detected using a detector. The detector may comprise one or more cameras operable to capture images of at least one of the user's eyes, and may be configured to detect a gaze location of the user. A dedicated detector (e.g. a standalone camera) may be arranged with respect to the user to detect a gaze location for the user. Alternatively, when the user is wearing an HMD, one or more detectors provided as part of the HMD may detect the gaze location for the user. Information indicative of the gaze location for the user can be communicated to the input processor 1210 via a wired or wireless communication from at least one of the HMD 600, 810 and any one of the detectors 610, 630, 640, 700, 840, 940.

In examples where the image is first rendered, the gaze location for the user may be detected in parallel to, or after, rendering of the image. This allows using more up-to-date gaze data for selecting the first and second regions of the image for upscaling, thus providing improved alignment between the user's gaze when viewing the upscaled image and the upscaled regions of the image, and providing an improved perceived quality of the image.

Considering predicting gaze location, alternatively or in addition to a detected gaze location, the input processor 1210 may receive gaze data indicative of a predicted gaze location of a user for the image. The prediction of the gaze location may be determined by a machine learning model. The machine learning model may for example be trained to predict likely user gaze locations based on characteristics of input images. For instance, gaze data may be collected for users viewing different images, and the gaze data along with corresponding images may be input into the machine learning model for training of the model. The model may be trained based on this training data to predict likely locations of user gaze for an input image. The input processor 1210 may then receive a prediction of the gaze location determined by the machine learning model based on the image (i.e. the image received by the input processor 1210, to be upscaled). It will be appreciated that, when predicted, the gaze data may be indicative of a plurality of gaze locations (e.g. of a plurality of objects of interest in the image) where the user is most likely to gaze when viewing the image.

The image and gaze data may be received by the input processor 1210 from a further component (e.g. rendering processor or detector) of the image processing system 1200 or from a further apparatus (e.g. HMD) as described above, using any suitable wired or wireless connection.

The image upscaling processor 1220 implements a form of foveated rendering for the received image based on the received gaze data for the user. The image upscaling processor 1220 does this by performing an upscaling process on at least part of the received image to increase the quality (e.g. the resolution) of the at least part of the image. The upscaling process is performed using a first kernel size for a first region of the received image corresponding to the gaze location of the user for the image and a second kernel size for a second region of the received image (e.g. the remainder of the received image or a region around the first region). The first kernel size is larger than the second kernel size, which allows improving the quality to a greater extent in the first region than in the second region.

As used herein the term "kernel" preferably relates to a matrix applied to an image to perform processing of the image. The processing may be performed by determining a convolution between the kernel and the image. In other words, the kernel may define a function for mapping from a pixel and nearby pixels in an input image to a pixel in an output image. The kernel may in some cases also be termed a "convolution matrix" and/or a "mask".

As used herein the term "kernel size" preferably relates to dimensions of the kernel (e.g. height (i.e. number of rows) and width (i.e. number of columns) for a two-dimensional kernel). The kernel size of a kernel may define the number of pixels of an input image covered/processed by the kernel. The kernel size may be symmetric (e.g. with a height × width of 3x3, or 5x5) or asymmetric (e.g. with a height × width of 3x5, or 2x4). References herein to a kernel size (e.g. the first kernel size) being larger than another kernel size (e.g. the second kernel size) preferably connote that the number of pixels of an input image processed by a kernel having the (e.g. first) kernel size is greater than the number of pixels of an input image processed by a kernel having the other (e.g. the second) kernel size. Thus, for example, a 5x5 kernel size (which covers 25 pixels) may be considered larger than a 3x3 kernel size (which covers 9 pixels), or a 6x4 kernel size (which covers 24 pixels).

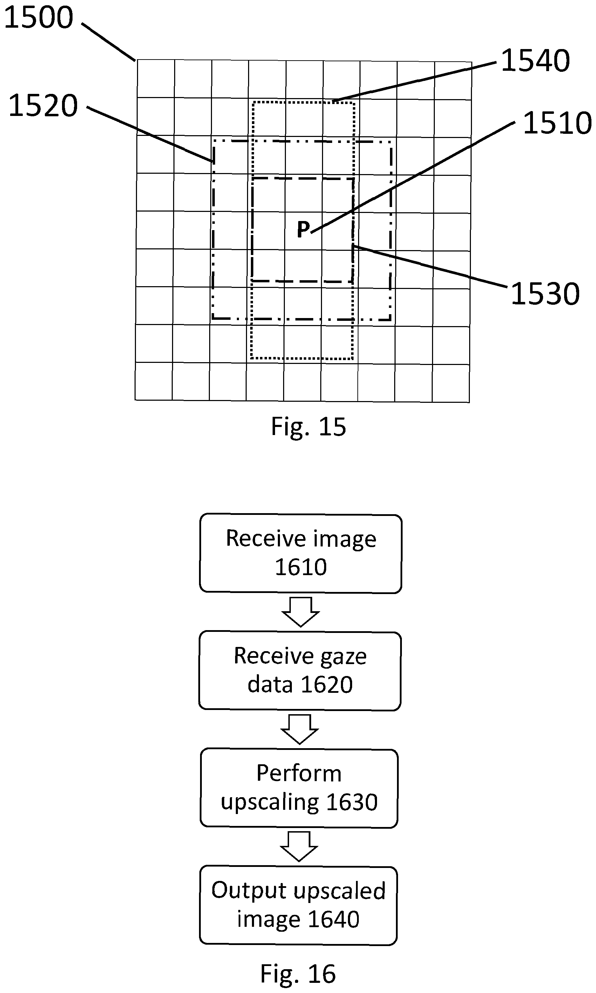

The upscaling process performed by the image upscaling processor 1220 may comprise upscaling the first region corresponding to the gaze location of the user for the image using a first kernel and upscaling the second region using a second kernel. A number of pixels of the image covered by the first kernel is greater than the number of pixels covered by the second kernel. The first and second kernels may be used as part of convolution operations (e.g. interpolation or transposed convolution). The upscaling process is further illustrated in Figure 15, which shows different example kernels and kernel sizes for use in upscaling of an image 1500. In Figure 15, the grid represents individual pixels of the image 1500. Figure 15 illustrates different example kernels 1520, 1530, 1540 as applied to a given pixel P / 1510. The kernel 1520 is symmetric and has a size of 5x5 pixels (i.e. covers 25 pixels centred around the pixel 1510). The kernel 1530 is also symmetric but has a smaller size of 3x3 pixels. In turn, the kernel 1540 is asymmetric and has a size of 7x3 pixels, and so is smaller than the kernel 1520 but larger than the kernel 1530.

Accordingly, for example, when upscaling an input image using interpolation, depending on the kernel 1520, 1530, 1540 used, each output pixels may be interpolated based on pixels covered by the respective kernel 1520, 1530, 1540 when determining that output pixel, as discussed in further detail later herein.

It will be appreciated that, during upscaling, each of kernels 1520, 1530, 1540 may be shifted along further pixels of the input image in order to determine further pixels of the output image.

It will be also appreciated that the kernel size affects the computational cost associated with processing of the image, which may increase with increasing kernel size as a greater number of pixels of an input image need to be processed for each output pixel. At the same time, for various image processing operations such as upscaling, the relative increase in quality of an image may increase with increasing kernel size as data from a greater number of pixels of an input image is taken into account in determining output pixels (e.g. an output pixel may be interpolated from a greater number of neighbouring pixels). For instance, in Lanczos interpolation a larger kernel size may provide smoother, and more gradual roll-off of frequencies, and allow obtaining a higher degree of anti-aliasing and image quality.

There is therefore a trade-off in increasing kernel size as while it may allow improving image quality, it also results in increased computational costs.

The present disclosure effectively balances this trade-off by using larger kernels to upscale the first region corresponding to the user gaze location, thus prioritizing this region in the allocation of computing resources; and using a smaller kernel to upscale the second region, thus still upscaling that region but at reduced computational cost.

The upscaling process performed by the image upscaling processor 1220 may use any suitable techniques for increasing the quality of the image. The quality of the image may relate to the resolution of the image, and/or any other properties of the image that are indicative of its quality, such as the degree of aliasing. Thus, for example, upscaling of the image may increase its resolution and/or reduce aliasing in the image. In some cases, upscaling of the image may comprise upsampling of the image.

Various techniques may be used to upscale the image. For example, the upscaling process may use interpolation (e.g. resampling), and/or deconvolution.

Considering interpolation, upscaling may comprise interpolating between pixels of the image to estimate values of new pixels, thus increasing the total number of pixels and the resolution of the image. The kernel size used in the interpolation may define how many pixels of the original image are considered to generate each pixel of the interpolated upscaled image.

Example suitable interpolation techniques include Nearest-Neighbour interpolation, Bilinear interpolation, Bicubic interpolation, and/or Lanczos interpolation/resampling. In Nearest-Neighbour interpolation only one - the nearest neighbouring - pixel in the original image is used to determine each pixel in the upscaled image, and so this technique may be considered to have a 1x1 kernel size. Similarly, in Bilinear and Bicubic interpolations, 2x2 and 4x4 neighbourhoods of pixels in the original image respectively are used to determine each pixel in the upscaled image, and so these techniques may be considered to have kernel sizes of 2x2 and 4x4 respectively. A range of kernel sizes may be used in Lanczos interpolation, such as 3x3, 5x5, 7x7, or 9x9; a larger kernel size may provide improved anti-aliasing and upscaled image quality, but at increased computational costs.

The same or different interpolation techniques may be used to upscale the first and second regions. Either way, the computational resources for upscaling may be primarily allocated to the upscaling of the first region which corresponds to the gaze location of the user. When using different interpolation techniques, techniques that provide improved quality of the interpolation may be used for upscaling of the first region, and computationally cheaper techniques may be used for upscaling of the second region. For example, the first region may be upscaled using Bicubic or Lanczos interpolation which use larger kernel sizes for improved quality of the interpolation, and the second region may be upscaled using Nearest-Neighbour interpolation or Bilinear interpolation which use smaller kernel sizes for reduced computational cost. When using the same interpolation technique for both the first and second regions, a larger kernel size may be used for the first region than for the second region. For example, Lanczos interpolation may be used for both the first and second regions, but with a larger kernel (e.g. kernel 1520 in Figure 15) for the first region, and a smaller (e.g. kernel 1530 in Figure 15) kernel for the second region.

In one or more examples, Lanczos interpolation/resampling may be used to upscale the image. Lanczos resampling can provide relatively high quality interpolation at relatively low computational cost.

It will be appreciated that any suitable interpolation technique may be used to upscale the image. For example, a further interpolation technique that may be used, alternatively or in addition to the techniques described above, is sinc interpolation.

Considering deconvolution (also termed "transposed convolution"), a transposed convolution kernel may be applied to an input image to increase its spatial dimensions and produce a higher resolution output image. The weights of the transposed convolution kernel may be learned by a neural network. It will be appreciated that the increase in resolution of the image (as well as the associated computational cost) may increase with increasing size of the transposed convolution kernel. Accordingly, as for interpolation, a larger kernel size may be used for the first region than for the second region.

In some cases, one or more deep neural network techniques may be used to upscale the image. For example, a plurality of transposed convolution layers may be arranged in series within a deep neural network to perform progressive upscaling of an image.

The weights/values of the kernels used for upscaling may be predetermined. For example, the weights may be empirically determined by an operator. Alternatively, or in addition, the weights may be determined or adjusted using a machine learning model for upscaling of images during training of the model. For example, the machine learning model (e.g. neural network) may adjust kernel weights during training to optimise a cost function, such as minimising reconstruction error.

In some cases, alternatively or in addition to increasing image resolution, upscaling of the image may comprise performing antialiasing processing of the image. An example of a suitable antialiasing technique is morphological antialiasing (MLAA), which is a post-processing operation that reduces aliasing (that is, the artefacts that can lead to blocky appearance of edges in an image) by smoothing the image where appropriate. This is achieved by blending pixels in an image based upon detected patterns in the image; for instance, pixels may be detected as belonging to a straight line and blending may be performed to smooth this line. A larger kernel may be used for MLAA for the first region than for the second region as using a larger kernel size may provide improved smoothing of the image and so further reduce anti-aliasing; however again at higher computational cost.

It will be appreciated that upscaling of the image (e.g. using interpolation) may be performed as part of a broader upscaling process used to increase the quality of the image, such as FidelityFX Super Resolution (FSR). Any appropriate broader upscaling process may be used, involving spatial and/or temporal upscaling. Such broader processes may perform further processing on the image, such as sharpening of the image, before outputting the image for display.

The kernel sizes / numbers of pixels covered by kernels for the various regions of the image (e.g. the first and second regions) may be predetermined. For example, the kernel sizes for use for different regions of the image may be determined empirically by an operator.

Alternatively, or in addition, the kernel sizes may be determined by a machine learning model. For example, in cases where upscaling is implemented by a deep learning machine learning model, the machine learning model may adaptively determine optimal kernel sizes to be applied for upscaling of different image regions during training of the model.

Referring back to Figures 13a and 13b, these show example regions that may be upscaled in an image using the techniques described herein.

Figure 13a shows an example image 1300 comprising a first region 1310 corresponding to the user's gaze location indicated by the gaze data received by the input processor 1210, and a second region 1320 comprising the remainder of the image. The first region 1310 may be upscaled using a first, larger kernel size (e.g. 5x5), and the second region 1320 may be upscaled using a second, smaller, kernel size (e.g. 3x3). Image 1300 is therefore an example of an image where the entire image is upscaled but using different kernel sizes for different regions of the image. As discussed herein, both the first 1310 and the second 1320 regions may be upscaled to the same resolution, thus providing an output image with a uniform image resolution to the user, and masking the fact that a form of foveated rendering has been implemented.

Figure 13b shows an example image 1350 comprising a first region 1310, a second region 1370, and a third region 1360. The first region 1310 corresponds to the user's gaze location as indicated by the gaze data.

In some cases, only part of the image 1350 may be upscaled. For example, for the image 1350 of Figure 13b, the first region 1310 may be upscaled using a first, larger kernel, and the third region 1360 (in effect acting as the second region of Figure 13a) may be upscaled using a smaller, third kernel, while the second region 1370 is not upscaled. In this way, the first region 1310 corresponding to the user's gaze location and a surrounding third region 1360 may be upscaled, with computational resources being primarily dedicated to the upscaling of the first region 1310 where a larger kernel is used. In this example, the computational cost of the upscaling is reduced by taking advantage of foveal perception and not upscaling the second region 1370 which is further removed from the user's gaze location.

Alternatively, the entire image may be upscaled, e.g. as described above with reference to Figure 13a, or by upscaling the second region 1370 of image 1350 using a second kernel size.

In some cases, a transition region may be provided between the first and second regions that uses a kernel size between those of the first and second regions. This can also be illustrated with reference to image 1350 shown in Figure 13b. A transition region for the image 1350 may be provided by upscaling the third region 1360 using a third kernel size that is smaller than the first kernel size (used for upscaling the first region 1310) but greater than the second kernel size (used for upscaling of the second region 1370). In this way, the third region 1360 can act as a transition region, of intermediate kernel size and quality (e.g. with intermediate aliasing), between the first region 1310 and the second region 1370. This allows providing a gradual drop-off in quality between the first and second regions, making the difference in quality less perceptible to the user whose perception of image quality also reduces with distance from the first, foveal region.

It will be appreciated that the transition, and ramp in upscaling quality (e.g. antialiasing performance), between the first and second regions may be provided using a plurality of transition regions of progressively smaller kernel sizes with increasing distance from the gaze location. The kernel size may vary in dependence upon distance from the gaze location, and decrease with increasing distance from the gaze location. The variation in kernel size with respect to distance from gaze location may be linear or non-linear.

Referring back to Figure 14, this shows example indicative kernel sizes that may be used to implement a transition region between the first and second regions. In this example, the image comprises a first region between the gaze location and distance A from the gaze location, a third region between distances A and B from the gaze location, and a second region between distances B and C from the gaze location. No upscaling may be provided beyond distance C from the gaze location. The first, second, and third regions are upscaled using kernel sizes s1 (e.g. 7x7), s2 (e.g. 5x5), and s3 (e.g. 3x3) respectively. In this way, a gradual drop-off in quality away from the first, foveal, region to the second region may be provided so that the reduction is less perceptible to the user.

In some cases, the drop-off in upscaling quality may be progressively steeper with increasing distance from the gaze location. For example, the difference between the third kernel size s3 and the first kernel size s1 (e.g. the difference in the number of pixels covered by the third and first kernels) may be smaller than the difference between the third kernel size s3 and the second kernel size s2 (e.g. the difference in the number of pixels covered by the third and second kernels). In other words, the step size in variation in kernel size may increase with distance from the gaze location. This can allow improving efficiency as larger step changes in quality further away the foveal region allow reducing computational costs while being less noticeable to the user.

It will be appreciated that the step change in kernel size between regions as shown in Figure 14 may approximate a ramp in kernel size for a larger number of regions (e.g. such a ramp may be illustrated considering a line between the kernel sizes at mid-points of each region). While Figure 14 only shows three regions for upscaling, such a ramp approximation would be clearer for larger numbers of intervening transition regions, similar to the third region discussed herein.

It will also be appreciated that alternatively or in addition to kernel size, further parameters of the upscaling process may be varied between regions of the image in order to obtain a (e.g. linear or non-linear) ramp in quality between the first and second regions. An example relevant parameter may be the target resolution of the upscaling process (i.e. the resolution to which the image is upscaled). For example, considering image 1350 in Figure 13b, the target resolution may progressively decrease with increasing distance from the gaze location across the third region 1370 (e.g. by 20 pixels in each dimension for every movement of 20 pixels away from the gaze location) to provide a gradual decrease in resolution across the third, transition 1360 region.

In some cases, the kernel size used for upscaling of a region (e.g. first and/or second region) may be modified at least in part based on characteristics of the image and/or the image processing system 1200.

Considering image characteristics, the kernel size for upscaling of a region of an image may be determined in dependence on characteristics of the image in that region. Example relevant characteristics may include an orientation (e.g. predominantly vertical or horizontal) of features in the image region, and/or a level of detail in the image region.

With regards to feature orientation, the orientation of features in an image region may for example be determined by extracting features from the image region (e.g. using one or more suitable feature extraction techniques), and determining a dominant feature orientation in the region (e.g. whether features in the region are predominantly arranged in a given orientation). In some cases, feature extraction performed by another stage of the upscaling process may be re-used for this purpose, e.g. features extracted as part of FSR may be analysed to determine whether they are arranged in any dominant orientation.

In this way, it may for example be determined that features in a given region of the image are predominantly vertical (which may e.g. be the case for an image region showing a fence or grass) or horizontal (which may e.g. be the case for an image region showing an arrow mid-air). Predominance of vertical/horizontal features may for example be determined based on a number or proportion of vertical features in the image region exceeding a predetermined threshold. A feature may for example be classified as vertical or horizontal in dependence on its dominant direction (i.e. the direction in which the feature extends) being within a predetermined angle of vertical or horizontal.

Upon determining that features are arranged in a given dominant orientation in an image region, the relative dimensions of the kernel size may be modified in dependence on the orientation of features. This can allow reducing artefacts caused by upscaling (e.g. interpolation) of the image by assigning a greater weight to neighbouring pixels in the dominant direction of features during upscaling. For example, the kernel size used for upscaling the given region may be increased in a direction depending on the dominant feature orientation. For instance, upon determining that features in a region of the image are predominantly vertical, an asymmetric kernel size with (e.g. with a height × width of 5x3) may be used in place of a 3x3 kernel size.

Alternatively, or in addition, the kernel size used for upscaling the given region may be decreased in a direction depending on the non-dominant feature orientation. For example, upon determining that features in a region of the image are predominantly vertical, an asymmetric kernel size with (e.g. with a height × width of 7x3) may be used in place of a 7x7 kernel size. Reducing kernel dimensions in the non-dominant feature orientation allows efficiently reducing computational cost, while maintaining image quality.

With regards to level of detail (LOD), the kernel size used for upscaling of a region of an image may be increased with increasing level of detail in that region, e.g. upon the LOD exceeding a predetermined threshold. Larger kernels that e.g. provide smoother and higher quality interpolation, may be used for regions with a higher LOD in which upscaling artefacts may be more noticeable to the user, while smaller kernels may be used for regions with a lower LOD to reduce overall computational costs. In some cases, upscaling techniques used may also be modified in dependence on the LOD in an image region. For example, computationally cheaper but less accurate upscaling techniques (e.g. Bilinear or Nearest-Neighbour interpolation) may be used in regions with a low LOD (e.g. a LOD below a first predetermined threshold), and computationally more expensive but more accurate upscaling techniques (e.g. Lanczos interpolation) may be used in regions with a higher LOD (e.g. a LOD above a second predetermined threshold). This can improve the balance between efficiency and upscaled image quality as computationally cheaper upscaling processes (e.g. by virtue of using a smaller kernel size and/or a computationally cheaper upscaling technique) are used in regions with a lower LOD and so where artefacts are less likely to be introduced and/or noticed by the user, while computationally more expensive upscaling processes are reserved for regions with a higher LOD which can help ensure those regions are accurately upscaled.

It will be appreciated that the modification to kernel size based on image characteristics may be made across the overall regions discussed above (e.g. across the entire first 1310, second 1370, and/or third 1360 regions of the image 1350 in Figure 13b), or sub-regions of those regions such as sub-regions in which particular feature orientations are dominant or the level of detail is particularly high or low.

Considering image processing system 1200 characteristics, the kernel size for one or more regions of the image may be modified in dependence on one or of: a frame rate for outputting the upscaled images to the display device, a quality to which the at least part of the image is upscaled, available computing resources, or communication bandwidth. This allows adjusting the computational cost of upscaling in dependence on the current requirements for outputting of the image (e.g. as set by the frame rate, and upscale quality) and/or the currently available resources for performing the upscaling (e.g. as set by the available computing (e.g. processing or storage) resources and/or communication bandwidth). The kernel size may be reduced with increasing output requirements (e.g. increasing frame rate or upscale quality, such as target upscale resolution) and/or reducing available resources. This can reduce the computational cost of the upscaling and can help ensure that the output requirements can be met with the currently available resources. The kernel size reduction may be determined based on an empirically determined function based on the output requirements and available resources. The extent to which the kernel size is modified may depend on the distance from the gaze location. For example, to reduce computational costs, a larger reduction in kernel size may be made in the second region than in the first region.

The image upscaling processor 1220 upscales the first region of the image corresponding to the gaze location using a first kernel size, and the second region using a second kernel size.

In some cases, in addition to upscaling the first region using the first kernel size, the image upscaling processor 1220 may upscale both the first region and the second region using the second kernel size. In other words, the image upscaling processor 1220 may perform multiple upscale passes on the image, which progressively improve the quality of the image. This can further improve the efficiency of upscaling of the image as the more computationally expensive upscale pass using the first kernel size can implement a smaller relative increase in resolution when the computationally cheaper upscale pass using the second kernel size has already partially increased the resolution in the first region (e.g. by already adding some of the new pixels using interpolation). Further, the second upscale pass can use the results of the first upscale pass - e.g. the second pass may comprise interpolation between pixels added by interpolation in the first pass; this can allow using simpler upscaling techniques in the second pass (e.g. Bicubic interpolation instead of Lanczos interpolation), thus further improving efficiency. This approach also contrasts with multiple render passes as in conventional techniques, where parts of an image rendered at a lower than target resolution (e.g. as part of an initial or intermediate render pass) are effectively discarded.

The upscaling of both the first and second regions using the second kernel size may be performed before or after the upscaling of the first region using the first kernel size. For example, the image upscaling processor 1220 may first upscale the first and second regions (which in some cases may together comprise the entire image) using the second kernel size to a second resolution (e.g. from 720 × 480p to 1280 × 720p), and then upscale the first region using the first kernel size to a yet higher, first resolution (e.g. to 1920 × 1080p). Alternatively, the image upscaling processor 1220 may first upscale the first region using the first kernel size to an intermediate resolution (e.g. from 720 × 480p to 1440 × 1080p), and then upscale the first and second regions (which in some cases may together comprise the entire image) using the second kernel size to a second resolution (e.g. 1280 × 720p) in the second region and to a first resolution in the first region (e.g. to 1920 × 1080p). Finally, turning to the output processor 1230, the output processor 1230 outputs the image upscaled by the image upscaling processor 1220 to a display device. The display device may be an HMD in some embodiments, although any display device may be used to display the image as appropriate.

It will be appreciated that the techniques described herein may be applied to VR content. For example, the input processor 1210 may receive a pair of images (e.g. a stereoscopic image pair), the image upscaling processor 1220 may perform upscaling of both of the pair of images, and the output processor 1230 may output both images to a display device (e.g. an HMD).

It will be appreciated that the pair of images received by the input processor 1210 may overlap. The first and second regions may be arranged in only one of the images, or extend across both images (e.g. if they are in an overlapping region of the pair of images). For example, the first and/or second regions of the image may extend across both images when the gaze location of the user is in an overlapping region present in both of the pair of images, in which case the first and second kernel sizes may be determined for one of the images and then applied to both of the images.

While the above discussion focuses largely on the use of HMDs, it would be understood that the techniques described below may be implemented using any displays. For example, a video game displayed on a television may be upscaled to a higher level of quality for an area corresponding to the user's gaze determined using one or more separate detectors; in such an embodiment the displaying of content and gaze tracking is not performed by an HMD.

Turning now to Figure 16, in a summary embodiment of the present invention a method of image processing comprises the following steps.

A step 1610 comprises receiving an image, as described elsewhere herein.

A step 1620 comprises receiving gaze data indicative of a gaze location of a user for the image, as described elsewhere herein.

A step 1630 comprises performing an upscaling process on at least part of the received image to increase quality of the at least part of the received image, where performing the upscaling process comprises upscaling a first region of the received image corresponding to the gaze location of the user for the image using a first kernel size and upscaling a second region of the received image using a second kernel size, where the first kernel size is larger than the second kernel size, as described elsewhere herein.

A step 1640 comprises outputting the upscaled image to a display device, as described elsewhere herein.

It will be apparent to a person skilled in the art that variations in the above method corresponding to operation of the various embodiments of the method and/or apparatus as described and claimed herein are considered within the scope of the present disclosure, including but not limited to that:
- the step 1630 of performing the upscaling process comprises upscaling the first region corresponding to the gaze location of the user for the image using a first kernel and the second region of the image using a second kernel, wherein a number of pixels of the image covered by the first kernel is greater than the number of pixels covered by the second kernel, as described elsewhere herein;
- performing 1630 the upscaling process comprises upscaling the first region of the received image to a first quality (e.g. resolution, aliasing, or artefact occurrence/likelihood) and upscaling the second region of the received image to a second quality, where the second quality is lower than the first quality, as described elsewhere herein;
- the degree of upscaling increases with increasing kernel size, such that upscaling using a larger kernel size results in improved image quality, as described elsewhere herein;
- the kernel size is proportional to the degree of upscaling, such that a greater upscaling is performed to an area associated with a larger kernel size, as described elsewhere herein;
- performing 1630 the upscaling process comprises increasing resolution of the at least part of the received image, as described elsewhere herein;
   - in this case, optionally the resolution is increased to the same resolution in both the first region and the second region of the received image, as described elsewhere herein;
- performing 1630 the upscaling process comprises interpolating between pixels of the at least part of the received image, as described elsewhere herein;
   - in this case, optionally performing 1630 the upscaling process comprises using the first kernel size for interpolating between pixels in the first region of the received image, and using the second kernel size for interpolating between pixels in the second region of the received image, as described elsewhere herein;
   - in this case, optionally the interpolating is performed using Lanczos resampling, as described elsewhere herein;
- performing 1630 the upscaling process comprises upscaling both the first region and the second region using the second kernel size, and upscaling the first region using the first kernel size, as described elsewhere herein;
- the second region comprises the remainder of the received image except the first region, as described elsewhere herein;
- performing 1630 the upscaling process comprises upscaling a third region of the received image, arranged between the first region and the second region, using a third kernel size, wherein the third kernel size is larger than the second kernel size and smaller than the first kernel size, as described elsewhere herein;
   - in this case, optionally the difference between the third kernel size and the first kernel size is smaller than the difference between the third kernel size and the second kernel size, as described elsewhere herein;
- further comprising modifying a kernel size for upscaling of at least one region of the received image in dependence on one or more characteristics of the received image in the at least one region, as described elsewhere herein;
   - in this case, optionally the one or more characteristics of the received image comprise an orientation of features in the received image, as described elsewhere herein;
      ▪ where, optionally relative dimensions of the kernel size are modified in dependence on the orientation of features, as described elsewhere herein;
   - in this case, optionally the one or more characteristics of the received image comprise a level of detail in the received image, as described elsewhere herein;
      ▪ where, optionally the kernel size is increased with increasing level of detail, as described elsewhere herein;
- further comprising modifying a kernel size for upscaling of at least one region of the received image in dependence on one or more selected from the list consisting of: a frame rate for outputting the upscaled images to the display device, a quality to which the at least part of the image is upscaled, available computing resources, or communication bandwidth, as described elsewhere herein;
- further comprising detecting the gaze location of the user using a detector, wherein the detector comprises one or more cameras operable to capture images of at least one of the user's eyes, as described elsewhere herein;
- the display device is a head-mountable display, as described elsewhere herein;
- further comprising rendering the image to a first, lower resolution; where the upscaling process increases the resolution of the at least part of the image to a second, higher resolution, as described elsewhere herein;
- the at least part of the image that is upscaled comprises the entire received image, as described elsewhere herein;
- performing 1630 the upscaling process comprises performing transposed convolution of the image, as described elsewhere herein; and
- the image is part of a videogame, as described elsewhere herein.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Hence referring back to Figure 12, in a summary embodiment of the present invention, an image processing system 1200 may comprise the following.

An input processor 1210 (for example a CPU of a processing device, HMD, or server) configured (for example by suitable software instruction) to receive an image and to receive gaze data indicative of a gaze location of a user for the image, as described elsewhere herein.

An image upscaling processor 1220 (for example a CPU of a processing device, HMD, or server) configured (for example by suitable software instruction) to perform an upscaling process on at least part of the received image to increase quality of the at least part of the received image, wherein performing the upscaling process comprises upscaling a first region of the received image corresponding to the gaze location of the user for the image using a first kernel size and upscaling a second region of the received image using a second kernel size, wherein the first kernel size is larger than the second kernel size, as described elsewhere herein.

An output processor 1230 (for example a CPU of a processing device, HMD, or server) configured (for example by suitable software instruction) to output the upscaled image to a display device, as described elsewhere herein.

It will be appreciated that the above system 1200, operating under suitable software instruction, may implement the methods and techniques described herein.

Of course, the functionality of these processors may be realised by any suitable number of processors located at any suitable number of devices and any suitable number of devices as appropriate rather than requiring a one-to-one mapping between the functionality and a device or processor.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An image processing method comprising:
receiving an image;
receiving gaze data indicative of a gaze location of a user for the image;
performing an upscaling process on at least part of the received image to increase quality of the at least part of the received image, wherein performing the upscaling process comprises upscaling a first region of the received image corresponding to the gaze location of the user for the image using a first kernel size and upscaling a second region of the received image using a second kernel size, wherein the first kernel size is larger than the second kernel size; and
outputting the upscaled image to a display device.

2. The image processing method of claim 1, wherein performing the upscaling process comprises increasing resolution of the at least part of the received image.

3. The image processing method of claim 2, wherein the resolution is increased to the same resolution in both the first region and the second region of the received image.

4. The image processing method of any preceding claim, wherein performing the upscaling process comprises interpolating between pixels of the at least part of the received image.

5. The image processing method of claim 4, wherein the interpolating is performed using Lanczos resampling.

6. The image processing method of any preceding claim, wherein performing the upscaling process comprises upscaling both the first region and the second region using the second kernel size, and upscaling the first region using the first kernel size

7. The image processing method of any preceding claim, wherein the second region comprises the remainder of the received image except the first region.

8. The image processing method of any preceding claim, wherein performing the upscaling process comprises upscaling a third region of the received image, arranged between the first region and the second region, using a third kernel size, wherein the third kernel size is larger than the second kernel size and smaller than the first kernel size.

9. The image processing method of any preceding claim, further comprising modifying a kernel size for upscaling of at least one region of the received image in dependence on one or more characteristics of the received image in the at least one region.

10. The image processing method of claim 9, wherein the one or more characteristics of the received image comprise an orientation of features in the received image, and wherein relative dimensions of the kernel size are modified in dependence on the orientation of features.

11. The image processing method of claim 9 or 10, wherein the one or more characteristics of the received image comprise a level of detail in the received image, and wherein the kernel size is increased with increasing level of detail.

12. The image processing method of any preceding claim, further comprising modifying a kernel size for upscaling of at least one region of the received image in dependence on one or more selected from the list consisting of: a frame rate for outputting the upscaled images to the display device, a quality to which the at least part of the image is upscaled, available computing resources, or communication bandwidth.

13. The image processing method of any preceding claim, wherein the display device is a head-mountable display.

14. A computer program comprising computer executable instructions adapted to cause a computer system to perform the method of any one of the preceding claims.

15. An image processing system comprising:
an input processor configured to:
receive an image; and
receive gaze data indicative of a gaze location of a user for the image;
an image upscaling processor configured to perform an upscaling process on at least part of the received image to increase quality of the at least part of the received image, wherein performing the upscaling process comprises upscaling a first region of the received image corresponding to the gaze location of the user for the image using a first kernel size and upscaling a second region of the received image using a second kernel size, wherein the first kernel size is larger than the second kernel size; and
an output processor configured to output the upscaled image to a display device.
